Europäisches Patentamt

European Patent Office

Office européen des brevets

(19)

(11) Numéro de publication : **0 505 247 B1**

(12) **FASCICULE DE BREVET EUROPEEN**

(45) Date de publication du fascicule du brevet :
06.12.95 Bulletin 95/49

(21) Numéro de dépôt : **92400677.8**

(22) Date de dépôt : **13.03.92**

(51) Int. Cl.⁶ : **H04L 12/42**

(54) **Station appartenant à un réseau de communication en forme d'anneau.**

(30) Priorité : **22.03.91 FR 9103530**

(43) Date de publication de la demande :
**23.09.92 Bulletin 92/39**

(45) Mention de la délivrance du brevet :
**06.12.95 Bulletin 95/49**

(84) Etats contractants désignés :
**DE FR GB IT**

(56) Documents cités :
**EP-A- 0 354 809**
**FR-A- 2 379 953**

(73) Titulaire : **BULL S.A.**
**Tour BULL,**
**1, place Carpeaux**
**F-92800 Puteaux (FR)**

(72) Inventeur : **Urien, Pascal**
**50, avenue du Général Leclerc**
**F-78230 Le Pecq (FR)**

(74) Mandataire : **Gouesmel, Daniel et al**
**Direction de la Propriété Intellectuelle BULL SA,**
**Poste courrier: LV59C18,**
**68 route de Versailles**
**F-78430 Louveciennes (FR)**

EP 0 505 247 B1

## Description

La présente invention concerne une station appartenant à un réseau de communication en forme d'anneau. Elle est plus particulièrement applicable à un réseau où les différentes stations sont reliées entre elles en série au moyen d'un médium de transmission, ou support de transmission, en formant ledit anneau, les données étant transmises dans un sens prédéterminé, sous forme de symboles (ensembles de bits).

Les réseaux de communication, ou encore de transmission de données, sont constitués par une pluralité d'unités, généralement appelées "équipement terminal de traitement de données", en abrégé E.T.T.D., (Data Terminal Equipment, en langue anglaise, en abrégé DTE) ou encore "station" par commodité de langage. Ces stations communiquent entre elles par l'intermédiaire d'un support de transmission, encore appelé médium de transmission. Dans un réseau, les données sont transmises sur le médium sous forme d'une suite de trames ("frames" en anglais), une trame étant structurée, comportant un message de début et de fin, des signaux de synchronisation pour en déduire l'horloge, l'adresse de la station émettrice, l'adresse de la station réceptrice, la longueur des données, les données utiles, etc.

Parmi les réseaux de transmission de données les plus couramment utilisés, on relève les réseaux en forme d'anneau ("ring network" en anglais), les supports de transmission pouvant être soit des câbles coaxiaux, soit des paires de fils téléphoniques, soit encore de plus en plus fréquemment des fibres optiques.

Quelle que soit la nature du support de transmission utilisé sur le réseau en forme d'anneau, une station connectée à un tel réseau possède trois fonctionnalités essentielles :

- la répétition de trames : en fonction de certaines règles, les trames reçues sont émises à nouveau, ce qui permet à une trame d'atteindre son destinataire après avoir traversé plusieurs stations,
- la destruction de trames : après avoir accompli un tour complet de l'anneau, la trame est détruite par son émetteur, ce qui évite une rotation sans fin de la trame sur l'anneau,
- l'émission de trames : pour émettre des trames, il est nécessaire de définir un mécanisme qui autorise ou interdit l'émission de trames à un instant donné.

Le fonctionnement d'un réseau est défini par un ensemble de règles et de dispositions qui forme ce que l'on appelle communément un protocole. Sur les réseaux en forme d'anneau (on dit encore sur les réseaux à topologie en anneau) les protocoles d'accès les plus communément employés dans la pratique courante utilisent la notion de jeton ("token", en anglais). Le jeton est un droit à émettre. A un instant donné, il n'existe qu'un seul jeton sur l'anneau. Toute station qui capture le jeton qui circule détient alors le droit d'émettre des trames, au détriment des autres, et dans ce cas, ne répète pas les éventuelles trames qu'elle reçoit. Le droit à émettre, c'est-à-dire le temps pendant lequel une station détient le jeton, est limité par un ensemble de règles propres aux différents protocoles utilisant un jeton (par exemple protocole FDDI, réseau à fibre optique défini par le Comité X3T9-5 de l'ANSI). En fin d'émission, la station qui avait capturé le jeton le relâche. Elle abandonne donc son droit à émettre, laissant ainsi la possibilité à d'autres stations de capturer le jeton.

En conséquence, les caractéristiques d'un protocole à jeton sont les suivantes :
- à un instant donné, une station au plus peut émettre des trames, c'est-à-dire accéder à l'anneau,
- au cas où il n'y a pas d'échange de données sur l'anneau, c'est-à-dire en condition de charge nulle de celui-ci, une station doit attendre le passage du jeton avant de pouvoir accéder à l'anneau,
- le temps de propagation du jeton sur l'anneau est perdu. En effet, durant le transit du jeton d'une station à l'autre, il est impossible à une station d'accéder à l'anneau, puisque cet accès implique la capture du jeton.

Les conséquences des caractéristiques énoncées plus haut sont les suivantes :

Considérons pas exemple un anneau possédant une latence (temps de propagation nécessaire à une donnée quelconque pour faire le tour complet de l'anneau) de l'ordre de 5 millisecondes, ce qui correspond, pour un réseau de type FDDI à fibre optique, à 1000 km de fibre. On suppose qu'une station capture le jeton, émet une trame, puis relâche le jeton. Dès lors, il lui faut attendre 5 millisecondes pour disposer à nouveau du jeton et ce, même si le trafic sur l'anneau est nul. On voit apparaître ici le défaut essentiel des anneaux à jeton : la latence de l'anneau régit directement la fréquence des accès à celui-ci.

On connaît des réseaux de communication remédiant aux inconvénients mentionnés ci-dessus : l'un d'entre eux est, par exemple, décrit dans le brevet français No.2 379 953. Un tel réseau est unidirectionnel et inclut une pluralité de stations reliées entre elles par un medium de transmission en forme d'anneau où les données sont transmises dans un sens déterminé, sous forme de symboles.

Il comprend :
- un dispositif de réception des trames provenant de l'anneau,
- un dispositif d'émission des trames vers l'anneau, émettant soit les prpres trames de la station, soit répétant ses propres trames,
- une mémoire FIFO de répétition disposée entre le dispositif de réception et le dispositif d'émission, destinée à contenir les trames destinées à être répétées par la station.

Le droit à émettre de chaque station est fonction du contenu de la mémoire de répétition.

Toute station ne détruit pas ce qu'elle a émis. De la sorte, elle peut voir son émission bloquée si la mémoire de répétition est pleine, sans aucune garantie que l'émission puisse reprendre.

La station selon l'invention et le réseau en forme d'anneau constitué par un ensemble de stations de ce type permettent de remédier aux inconvénients mentionnés ci-dessus et possèdent par contre les qualités suivantes :

- plusieurs stations selon l'invention peuvent accéder simultanément à l'anneau, sans collision,
- en situation de charge nulle, une station peut accéder de façon continue à l'anneau,
- sous forte charge, la bande passante est répartie entre les différentes stations, selon un schéma déterminé à l'avance. Ce partage peut être équitable ou non en fonction des utilisateurs des stations.
- le temps d'accès à l'anneau est déterminé, c'est-à-dire a une valeur maximale déterminée.

Selon l'invention, la station appartenant à un réseau de communication où les différentes stations sont reliées entre elles en série au moyen d'un médium de transmission, en formant un anneau où les données sont transmises dans un sens prédéterminé, sous forme de symboles, comprenant :

- un dispositif de réception des trames provenant de l'anneau,
- un dispositif d'émission des trames vers l'anneau, émettant soit les propres trames de la station, soit répétant les trames qu'il reçoit des autres stations,
- une mémoire FIFO de répétition, disposée en série entre les dispositifs de réception et d'émission, destinée à contenir les trames destinées à être répétées par la station,

est caractérisée en ce qu'elle comprend :

- des moyens de destruction de trames disposés dans le dispositif de réception, qui détruisent toutes les trames émises par la station (ST) elle- même, lesquelles reviennent à l'entrée du dispositif de réception après un tour complet de l'anneau,

le dispositif d'émission émettant soit les propres trames de la station, soit répétant ses propres trames, le droit à émettre de la station étant, à un instant donné, égal à la différence entre la profondeur Tb de la mémoire de répétition et la quantité Rb de symboles présents dans celle-ci à cet instant, lorsque cette quantité est inférieure ou égale à une valeur déterminée T-Pri.

D'autres caractéristiques et avantages de la présente invention apparaîtront dans la description suivante, donnés à titre non limitatif et en se référant aux dessins annexés.

Sur ces dessins :

- la Figure 1 montre de façon schématique comment est constitué un réseau de communication en anneau,
- la Figure 2 montre les éléments constitutifs essentiels d'une station selon l'invention,
- la Figure 3 montre, de manière plus détaillée qu'à la Figure 2, l'ensemble des éléments constitutifs d'une station selon l'invention,
- les Figures 4 à 8 illustrent le fonctionnement d'un réseau incorporant deux stations selon l'invention.

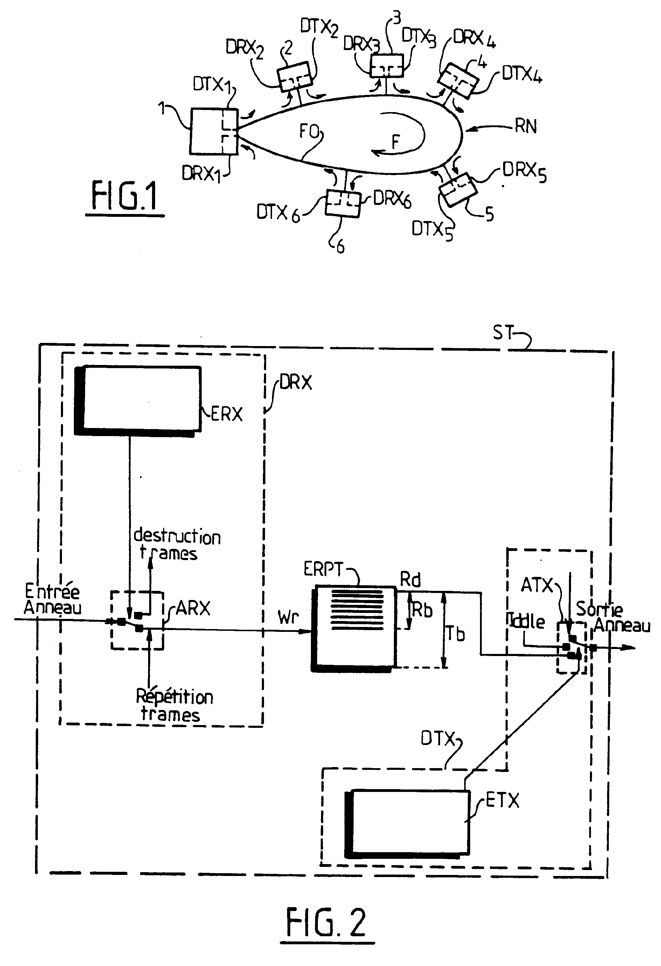

On considère la Figure 1 qui montre un réseau RN en forme d'anneau comprenant, par exemple, disposées en série, six stations 1 à 6. Ces stations sont reliées entre elles au moyen d'un médium de transmission, par exemple, constitué de fibres optiques, à savoir FO. Les données sont transmises sur l'anneau dans un sens prédéterminé, par exemple indiqué par la flèche F à la figure 1.

Chaque station comprend un dispositif de réception, à savoir le dispositif $DRX_1$ pour la station 1, $DRX_2$ pour la station 2 et ainsi de suite, $DRX_6$ pour la station 6.

De même, chaque station comprend un dispositif d'émission de données vers l'anneau, à savoir le dispositif d'émission $DTX_1$ pour la station 1, $DTX_2$ pour la station 2,... $DTX_6$ pour la station 6. Ainsi, les données émises par le dispositif d'émission $DTX_1$ de la station 1 sont envoyées, via la fibre FO au dispositif de réception $DRX_2$ de la station 2. Ainsi qu'il a été dit plus haut, les trames reçues par le dispositif de réception $DRX_2$ sont soit émises à nouveau par le dispositif d'émission $DTX_2$, suivant les règles et les protocoles utilisés sur l'anneau RN, soit détruites si elles ont fait un tour complet de l'anneau (dans ce cas, il est évident que ces données auront été émises par le dispositif d'émission $DTX_2$). Il en est évidemment de même pour les autres stations 3, 4, 5 et 6.

Chaque trame est constituée de la suite de symboles suivants :

- symbole SD : ce symbole délimite le début d'une trame. (SD signifie " start delimiter"),
- symbole IDT : ce symbole est utilisé pour détecter toute trame qui est perdue sur l'anneau,
- symbole DA : ce symbole indique l'adresse de la station destinataire de la trame (DA signifie "destination address" en anglais),
- symbole SA : ce symbole indique l'adresse de l'émetteur de la trame (SA signifie "source address" en anglais),

- symbole DATA : il s'agit du champ contenant toutes les informations utiles de la trame,
- symbole ED : ce symbole délimite la fin d'une trame (il signifie "end delimiter").

Une trame est donc constituée, dans l'ordre de transmission, de la suite des symboles suivants :

SD     IDT     DA     SA     DATA     ED

A l'exception du symbole IDT qui est spécifique des trames envoyées par une quelconque station selon l'invention, les autres symboles sont connus et utilisés dans la plupart des réseaux connus tels que les réseaux de type Token Ring ou FDDI.

L'absence de trame est indiquée par une suite de symboles spécifiques dits "IDDLE". De tels symboles sont obligatoirement transmis par toute station qui n'a aucune trame spécifique à émettre ou à répéter. Ils sont connus et utilisés dans la plupart des réseaux de l'art antérieur.

Les trames de données sont séparées par des symboles IDDLE, de sorte que le schéma général de succession des symboles circulant sur l'anneau RN est le suivant :

SD....ED        IDDLE....IDDLE        SD....ED

et ainsi de suite.

Les éléments constitutifs essentiels de la station ST selon l'invention apparaissent à la _Figure 2_. Ce sont successivement le dispositif de réception DRX, l'élément de répétition ERPT, le dispositif d'émission DTX.

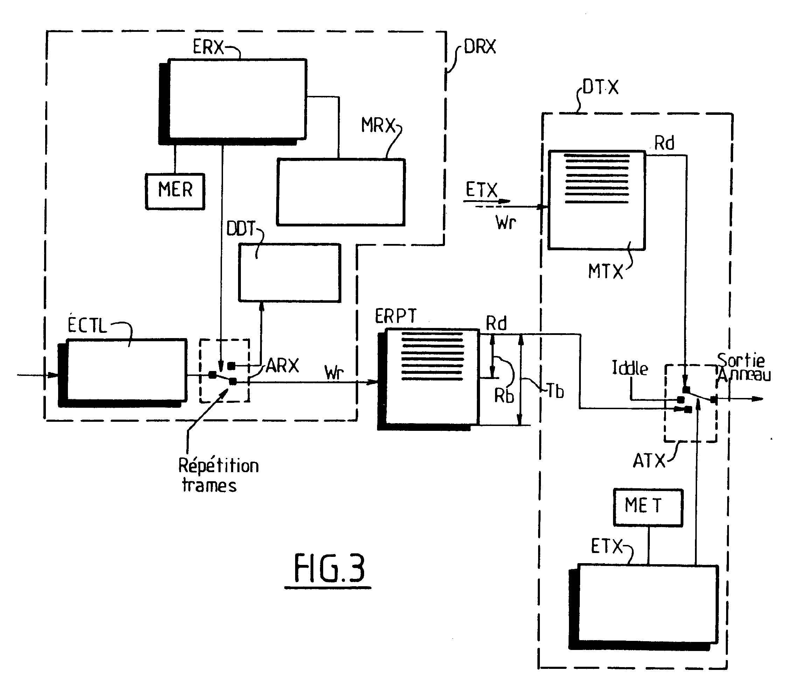

Le dispositif de réception DRX comprend deux parties essentielles, à savoir un élément de réception ERX et un dispositif d'aiguillage ARX. Ce dernier est connecté physiquement au médium de transmission de l'anneau RN (il est ici supposé que l'anneau RN est identique à celui de la Figure 1 et que le médium de transmission est par exemple constitué par une fibre optique) et commandé par l'élément de réception. Ce dernier examine les symboles constituant chaque trame provenant de l'anneau et décide, en fonction de cet examen, si la trame en question doit être détruite ou répétée. Si la trame doit être détruite, le dispositif d'aiguillage ARX l'envoie vers un dispositif de destruction de trame DDT appartenant également au dispositif de réception DRX, montré à la Figure 3. Si la trame doit être répétée par la station ST, les symboles correspondants sont transmis par le dispositif d'aiguillage ARX à l'élément de répétition ERPT.

L'élément de répétition ERPT mémorise les symboles de chaque trame qui sont à répéter par la station ST. Il est constitué, de préférence, par une mémoire FIFO dont l'écriture est gérée par le dispositif de réception DRX (et plus spécifiquement par l'élément de réception ERX), ce qui est représenté par la présence du symbole Wr (Write) aux figures 2 et 3, présent sur la ligne de liaison entre ARX et ERPT, et la lecture par le dispositif d'émission DTX (et plus spécifiquement par un élément d'émission ETX dont le rôle sera spécifié plus loin), ce qui est représenté par la présence du symbole Rd (Read) aux mêmes figures, sur la ligne reliant ERPT à ATX (voir plus loin).

En fait, le symbole Wr correspond à l'adresse de la zone mémoire de la FIFO de répétition où doivent être écrites les trames à répéter par la station ST et le symbole Rd correspond à l'adresse de la zone où doivent être lues les trames à répéter, destinées à être émises par DTX. Ces adresses sont fournies par des compteurs internes à DRX et DTX qui peuvent être constitués soit par des éléments matériels, soit par des pointeurs logiciels.

Le dispositif d'émission DTX émet, soit les symboles contenus dans l'élément ERPT, au cas où la station répète la trame qu'elle a reçue, soit émet des symboles propres à la station elle-même. Les composants essentiels de ce dispositif d'émission sont un élément d'émission ETX et un dispositif d'aiguillage ATX, lequel est connecté à l'anneau RN, et commandé par l'élément ETX. Ce dispositif d'aiguillage ATX est également connecté à la sortie de l'élément de répétition ERPT.

On se reporte désormais à la _Figure 3_ qui montre plus en détail l'ensemble des composants de la station selon l'invention montrée à la Figure 2.

Le dispositif de réception DRX comprend, outre les éléments déjà cités, à savoir l'élément de réception ERX, le dispositif d'aiguillage ARX et le dispositif de destruction de trame DDT, une mémoire tampon de réception MRX et un élément de contrôle ECTL. Ce dernier est unique sur l'anneau et est donc en fait commun à toutes les stations du réseau RN. Il assure la destruction des éventuelles trames perdues : il empêche donc une trame qui n'aurait pas été, par erreur, détruite par l'une des stations du réseau de faire une deuxième fois le tour de l'anneau. C'est donc un dispositif de sécurité propre à l'anneau et commun à toutes les stations. Le dispositif de réception DRX comprend également une machine d'état MER commandée par l'élément de réception ERX.

L'élément de réception ERX est, de préférence, constitué par une Logique fonctionnelle qui décide si chaque trame entrant dans la station doit être ou non répétée par celle-ci. Pour cela, l'élément ERX examine l'ensemble des symboles constituant la trame, reconnaît ceux-ci et en fonction de leur nature décide si la trame doit être répétée ou non. ERX effectue également la recopie de chacune des trames destinées à la station ST elle-même. Cette recopie est effectuée dans la mémoire tampon MRX. Ceci a lieu lorsque le symbole DA est égal à l'adresse propre de la station ST. Cette adresse propre de la station est désignée par le symbole MA. Il y a donc recopiage de la trame destinée à la station dans la mémoire tampon MRX lorsque DA = MA.

Les trames destinées à la station, qui sont recopiées dans MRX, doivent également être répétées (et donc envoyées à ERPT) pour que la station qui les a émises conserve la possibilité de les détruire et donc de conserver son droit à émettre (voir définition du droit à émettre dans la suite du texte).

L'algorithme de répétition permettant à l'élément de réception ERX de décider qu'une trame reçue par la station ST doit être ou non répétée, et de ce fait envoyée par l'intermédiaire du dispositif d'aiguillage ARX au FIFO de répétition ERPT, est le suivant :

Si l'on a simultanément présence du symbole SD et si le symbole SA est différent de MA (cela signifie que l'adresse de la station à laquelle est destinée la trame est différente de l'adresse propre de la station ST), aussi longtemps que le symbole SD est un symbole valide, alors on répète l'ensemble des symboles constituant la trame reçue. Ceux-ci sont alors envoyés à la FIFO de répétition ERPT.

On rappelle qu'un symbole est valide lorsque sa signification à l'intérieur de la trame reçue est connue, ou encore lorsqu'on sait qu'il existe dans le protocole utilisé sur l'anneau RN. L'élément ERX connaît la définition de tous les symboles utilisés dans ledit protocole, ceux-ci étant par exemple consignés dans une table interne à cet élément. ERX peut donc déterminer de ce fait si un symbole est ou non valide.

Le dispositif de réception DRX (et par conséquent la logique fonctionnelle constituant l'élément de réception ERX) ne possède donc que deux états possibles contenus dans la machine d'état MER. Ces deux états sont :

- état $E_1$ : cet état, appelé RX-REPEAT, est celui où une trame, telle que SA est différent de MA, est détectée. Le flot de symboles constituant la trame reçue par la station ST est alors dirigé par l'intermédiaire de ARX vers la FIFO de répétition ERPT. Dans ce cas, les signaux constituant la trame sont remis en forme et régénérés par un dispositif de remise en forme (connu et utilisé dans toutes les stations des réseaux selon l'art antérieur) non représenté pour simplifier aux figures 2 et 3. Cette remise en forme a lieu avant que les signaux ne parviennent à ERPT.
- état $E_2$ : cet état, appelé RX-RELEASE, est celui où le flot de symboles correspondant à la trame qui arrive dans la station ST est retiré de l'anneau. C'est le cas des trames où SA est égal à MA et c'est également le cas de tous les symboles IDDLE. La trame est détruite par DDT, en n'étant tout simplement pas envoyée au dispositif de remise en forme et dès lors non régénérée et donc perdue.

Ce qui vient d'être décrit ci-dessus concernant la définition des états $E_1$ et $E_2$ est complété par le tableau I qui est présenté en annexe à la fin de la description, tableau qui montre le passage de l'état $E_1$ à l'état $E_2$ et réciproquement. Ainsi, on passe de l'état $E_2$ à l'état $E_1$ lorsque simultanément l'on a SD valide et SA différent de MA.

Réciproquement, on passe de l'état $E_1$ à l'état $E_2$ lorsque l'on a détecté un symbole IDDLE ou lorsque l'on a SA = MA.

La machine d'état MER qui mémorise les états $E_1$ et $E_2$ pourrait par exemple être constituée par un circuit intégré spécifique ou par un microprocesseur programmé à cet effet (microprocesseur monolithique chez SGS-Thomson sous la référence Z-80).

L'élément de répétition ERPT mémorise donc les symboles constituant chaque trame à répéter, fournis par le dispositif DRX via ARX lorsque la machine d'état MER est dans l'état RX-REPEAT.

Lorsque la station ST n'émet pas ses propres trames, les symboles présents dans la FIFO de répétition sont de nouveau émis sur l'anneau par le dispositif d'émission DTX. Dans ce cas, le contenu de la FIFO de répétition reste stable (c'est-à-dire le nombre de symboles contenus dans cette FIFO reste constant) si la machine d'état MER est dans l'état $E_1$, c'est-à-dire RX-REPEAT. Cela signifie que le nombre de symboles ré-émis par la station, par l'intermédiaire du dispositif DTX, est égal au nombre de symboles entrant dans la mémoire FIFO provenant de l'anneau, ces derniers étant destinés, eux aussi, à être répétés. Par contre, lorsque la machine d'état MER est dans l'état $E_2$, c'est-à-dire RX-RELEASE, le contenu de la FIFO de répétition décroît (le nombre de symboles contenus dans celle-ci décroit) puisque les symboles qui sont émis par la station et qui étaient contenus dans la FIFO de répétition, ne sont pas remplacés par un nombre équivalent de symboles provenant de l'anneau, ceux-ci étant soit détruits, soit des symboles IDDLE.

Lorsque le dispositif d'émission DTX de la station ST émet ses propres trames, la FIFO de répétition mémorise alors des symboles qui seront répétés ultérieurement sur l'anneau (après que la station aura cessé d'émettre ses propres trames).

Le dispositif d'émission DTX comprend, outre les éléments précédemment cités, à savoir ETX et ATX, une mémoire tampon MTX et une machine d'état MET. La mémoire tampon MTX est reliée au dispositif d'aiguillage ATX et est commandée par l'élément d'émission ETX. Elle contient l'ensemble des symboles des trames destinées à être émises en propre par la station ST. La machine d'état MET comprend 3 états $E_3$, $E_4$, $E_5$ qui seront définis plus loin en relation avec la description du fonctionnement du dispositif d'émission DTX. Elle est reliée à l'élément d'émission ETX. MET est constitué de la même façon que MER.

Sous la commande de l'élément d'émission ETX, le dispositif d'émission DTX peut émettre, par l'intermédiaire du dispositif d'aiguillage ATX, soit ses propres trames contenues dans la mémoire tampon MTX, soit des symboles IDDLE, soit répéter des trames que le dispositif de réception DRX a reçues en provenance de l'anneau RN, et stockées temporairement dans la FIFO de répétition ERPT.

L'élément d'émission ETX est l'élément fondamental du dispositif d'émission et, partant, de l'ensemble de la station selon l'invention. C'est lui qui décide du droit à émettre de la station, dans les conditions qui sont définies ci-dessous :

A un instant quelconque donné, que la station cherche à émettre ou non, la quantité de symboles contenus dans la FIFO de répétition ERPT est égale à $R_b$. Lorsque cette quantité est inférieure ou égale à une valeur prédéterminée T-Pri, le droit à émettre est alors à $T_b$ - $R_b$, où $T_b$ est égale à la profondeur de la FIFO de répétition, c'est-à-dire à la quantité maximum de symboles que peut contenir celle-ci. $T_b$ représente alors également le temps maximum d'émission autorisé : en effet, il convient de préciser que, à une quantité de symboles déterminée correspond un temps de trafic déterminé sur l'anneau. A un symbole contenant un nombre déterminé de bits qui est le même quel que soit le type de symboles, il est donc associé un temps de trafic puisque le débit sur l'anneau est connu et parfaitement constant, par exemple, de l'ordre de plusieurs mégabits par seconde. $T_b$ représente donc bien, à la fois une quantité de symboles maximum et un temps maximum d'émission autorisé.

Lorsque la station ST accède au réseau à un moment déterminé, la quantité de symboles présents dans la FIFO de répétition est désignée par Q-lock. On a alors évidemment :

$$Q - lock = R_b$$

Cette quantité est mémorisée par l'élément d'émission ETX qui connaît également la quantité $T_b$. La station émet alors un nombre maximal de symboles ($T_b$ - Q-lock). Une fois que la station a émis ce nombre maximal de symboles, elle peut répéter les symboles contenus dans la FIFO de répétition durant le temps Q-lock, ce qui garantit la circulation des trames sur l'anneau.

On rappelle qu'une FIFO est munie de pointeurs indiquant en permanence leur état de remplissage, cette information étant communiquée en permanence à l'élément d'émission ETX. Q-lock est donc toujours connu de ETX.

En fonction de ce qui précède, on voit que la FIFO de répétition n'est pas vidée quand la station ST émet. Cette dernière ne peut émettre que ce qui reste d'emplacements libres dans la FIFO, au moment où l'on décide d'émettre (quantité $T_b$ - Q-lock).

Par ailleurs, si à un moment donné, la FIFO de répétition est complètement remplie, elle doit pouvoir se vider de manière à permettre à la station d'émettre ultérieurement. Ce qui garantit que la FIFO puisse se vider est le fait que ce qui a été émis par la station ST va être détruit par DRX lorsque l'ensemble des symboles émis va revenir sur celui-ci (voir ci-dessus). On voit donc que le mécanisme qui régit le fonctionnement de la station selon l'invention est auto-régulateur, car on détruit autant de symboles que ce qui a été émis et on vide la FIFO de répétition d'autant de symboles.

En conclusion, on voit que c'est le taux de remplissage de la FIFO de répétition qui détermine le droit à émettre de la station.

Dans le cas particulier où on choisit la valeur prédéterminée T-Pri égale à 0, la station accède à l'anneau lorsque la FIFO de répétition est vide (car $R_b$ = 0 dans ce cas). Supposons alors celle-ci vide à un instant donné. La station obtient donc le droit d'émettre pendant un temps maximum $T_b$. Durant l'émission, les éventuels symboles à répéter sont mémorisés dans la FIFO de répétition. Si l'anneau est à la saturation (dans ce cas, la machine d'état MER de DRX est dans l'état $E_1$), la FIFO de répétition restera non vide jusqu'au retour de toutes les trames qui auront été émises (dans ce cas, l'on a SA = MA), ce qui provoque le changement d'état de MER : on passe de l'état $E_1$ à l'état $E_2$, ce qui rend à nouveau la FIFO vide, puisque l'on détruit toutes les trames émises.

En cas de moindre charge sur l'anneau, c'est la réception d'un nombre suffisant de symboles IDDLE qui permet de purger la FIFO de répétition, car plus rien ne rentre dans celle-ci et alors on peut émettre.

La machine d'état MET du dispositif d'émission DTX comprend trois états : $E_3$, $E_4$, $E_5$ :

- état $E_3$ : dans cet état, dénommé TX-IDDLE, la station ST émet des symboles IDDLE, ce qui se produit, d'une part lorsqu'elle ne dispose d'aucun symbole à émettre ou à répéter, et d'autre part lors de la détection de fin de trame, effectuée par l'élément de réception ERX.
- état $E_4$ : dans cet état, dénommé TX-DATA, la station ST émet sur l'anneau ses propres trames, les éventuels symboles à répéter étant alors mémorisés dans la FIFO de répétition ERPT.
- état $E_5$ : dans cet état, dénommé TX-REPEAT, la station ST lit les symboles contenus dans la FIFO de répétition et les ré-émet sur l'anneau RN.

La façon dont on passe de l'un des états $E_3$, $E_4$ et $E_5$ à un autre de ceux-ci est résumée sur le Tableau II qui figure en Annexe à la fin de la description, et s'effectue dans des conditions définies ci-dessous, après avoir donné les définitions suivantes :

Le drapeau ("flag" en anglais) interne à la machine d'état MET, dénommé " lock-tx", est un drapeau qui, suivant qu'il est VRAI ou FAUX (suivant que sa valeur logique est 1 ou 0), interdit ou non la transition de l'état $E_3$ à l'état $E_4$. Ainsi, si ce drapeau est VRAI, il y a impossibilité de transition de l'état $E_3$ à l'état $E_4$.

Le drapeau dénommé "flag-tx" également interne à la machine d'état MET, indique si la station ST est ou non en train d'émettre ses propres trames. Ainsi, si ce drapeau est dans l'état VRAI (valeur logique par exemple égale à 1), cela signifie que la station ST est en train d'émettre ses propres trames. De même, si ce drapeau est dans l'état FAUX (état logique par exemple égal à 0), la station ST n'est pas en train d'émettre ses propres trames.

Pour passer de l'état $E_3$ à l'état $E_4$, il faut donc que, d'une part, le drapeau "lock-tx" soit dans l'état FAUX, et que d'autre part, soit l'on ait $R_b$ inférieur ou égal à T-Pri, soit l'on ait "flag-tx" dans l'état VRAI. Au début de l'émission par la station ST, on a :

Q-lock = $R_b$,

flag-tx = VRAI

Te-Max = $(T_b - R_b)$, où Te-max est le droit maximum à l'émission au début de la transmission.

A la fin de l'émission de l'ensemble de toutes les trames, on a :

flag-tx = FAUX

Si Q-lock est différent de 0, alors lock-tx = VRAI.

Pour passer de l'état $E_4$ à l'état $E_3$, à la fin de la transmission de chaque trame, il suffit d'avoir détecté le symbole ED (détection par l'élément ETX).

Pour passer de l'état $E_3$ à l'état $E_5$, il faut que les conditions suivantes soient réunies : d'une part, le drapeau flag-tx doit être dans l'état FAUX, et d'autre part, la FIFO de répétition ERPT doit être non vide, c'est-à-dire que l'on doit avoir Q-lock différent de 0. Une fois que l'on est dans l'état $E_5$ (TX-REPEAT), à la fin de l'émission de toute trame qui est répétée, si le drapeau lock-tx est dans l'état VRAI, alors on décrémente la quantité Q-lock du nombre de symboles qui ont été répétés. Dans le cas où Q-lock = 0, alors le drapeau lock-tx est dans l'état FAUX. Pour passer de l'état $E_5$ à l'état $E_3$, il faut, ou bien détecter un délimiteur de fin de trame ED (à la fin de chaque trame répétée), ou bien que la FIFO de répétition soit vide.

Il est clair que l'on ne peut passer directement de l'état $E_4$ à l'état $E_5$ ou réciproquement, puisque les trames sont toujours séparées par des symboles IDDLE et qu'il est donc nécessaire de passer par l'intermédiaire de l'état $E_3$ pour passer de $E_4$ à $E_5$ et réciproquement.

L'élément de contrôle ECTL est un élément particulier unique sur l'anneau qui empêche toute trame d'effectuer plusieurs tours d'anneau. Il est décrit ici comme faisant partie de la station ST (comme faisant partie du dispositif DRX), mais il est évident que, dans ce cas, seule la station ST est munie de ECTL, les autres stations de l'anneau RN en étant, bien entendu, dépourvues.

Toute trame est émise sur l'anneau avec un champ d'identification IDT défini alors comme égal à RESET (qui correspond dans l'exemple de réalisation décrit ici à une valeur logique égale à 0). Dès qu'il reçoit une trame, l'élément ECTL donne au champ IDT une valeur appelée SET (correspondant, dans l'exemple de réalisation décrit ici, à une valeur logique de 1), et repète alors la trame qu'il envoie sur les autres stations. Par contre, il détruit toutes les autres trames dont le champ IDT est égal à SET. Il est donc impossible qu'une trame traverse deux fois l'élément de contrôle. La machine d'état de l'élément de contrôle, non montrée pour simplifier à la Figure 3, est la suivante : elle permet de passer de l'état $E_6$ à l'état $E_7$ et réciproquement.

Dans l'état $E_6$, également appelé ECTL-IDDLE, l'élément de contrôle émet des symboles IDDLE.

Dans l'état $E_7$, également appelé ECTL-REPEAT, l'élément de contrôle répète les trames qu'il reçoit.

Le passage de $E_6$ à $E_7$ et réciproquement est illustré par le Tableau III qui figure dans l'Annexe présentée en fin de description.

Pour passer de l'état $E_6$ à l'état $E_7$, il faut que la trame reçue par l'élément de contrôle ECTL comporte un symbole SD valide et que, d'autre part, le champ d'identification IDT soit dans l'état RESET. ECTL met alors le champ d'identification IDT dans l'état SET.

Pour passer de l'état $E_7$ à l'état $E_6$, il suffit de détecter un symbole IDDLE.

Lorsque l'on a simultanément présence d'un symbole SD valide et d'un champ d'identification IDT égal à SET, on reste dans l'état $E_6$, l'élément de contrôle détruisant alors la trame reçue.

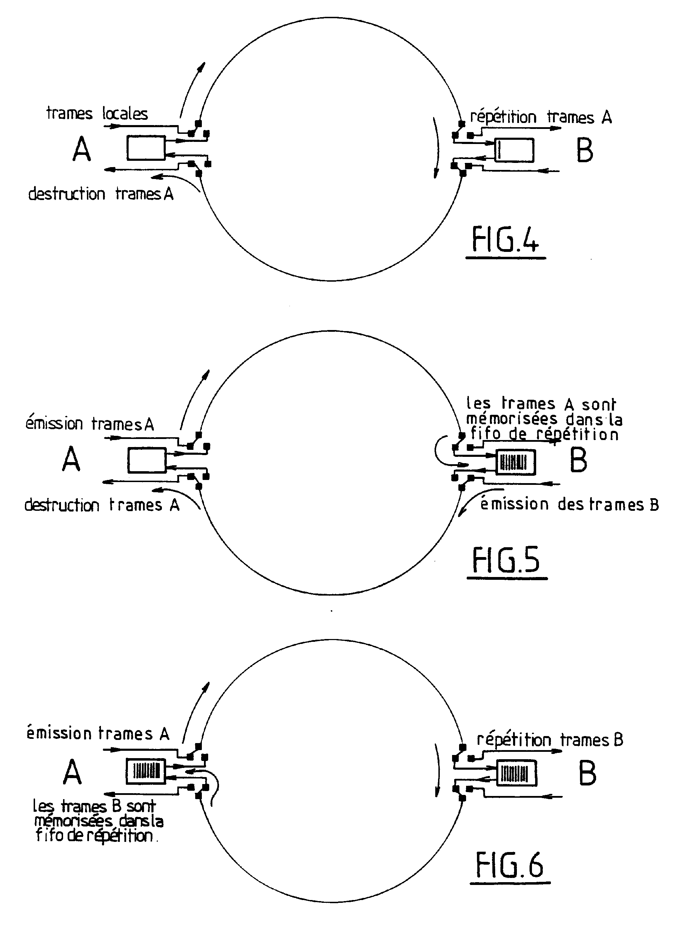

On considère désormais les Figures 4 à 8 qui illustrent de façon plus précise le fonctionnement d'un réseau RN incorporant des stations selon l'invention.

On examine tout d'abord comment s'effectue le partage du médium de transmission entre chacune des stations telles que ST, chaque station portant la référence d'indice i.

On considère le cas où l'anneau RN est saturé, c'est-à-dire le cas où chaque station du réseau tente d'accéder de façon continue au médium de transmission.

On désigne par tpd le temps de propagation de l'anneau, et par Tbi avec $1 <= i <= n$, n étant le nombre de stations du réseau, les droits maximum d'émission des stations. Tbi est donc la profondeur de la FIFO de répétition de la station référencée i.

La quantité maximale de symboles en transit sur l'anneau est donc égale à la somme des droits maximum d'émission de toutes les stations augmentée du temps de propagation de l'anneau, c'est-à-dire :

$$Qmax = tpd + \sum_{1}^{n} Tbi$$

En effet, au temps tpd correspond un nombre de symboles qu'on peut considérer comme "mémorisés" par le médium de transmission, nombre correspondant à ce qui a été mémorisé avant que les FIFOs ne soient remplies : ce sont donc des symboles mémorisés à l'extérieur des FIFOs dans le médium qui peut, dès lors, être considéré comme une FIFO d'un type particulier.

Les symboles présents sur l'anneau ont été émis par les différentes stations i. Si Qi est le nombre de symboles qui a été réellement émis par chaque station référencée i, on a donc :

$$Qmax = \sum_{1}^{n} Qi$$

Avant la saturation complète de l'anneau, un certain nombre de symboles IDDLE circulait. La capture de ceux-ci augmentait le droit à l'émission de chaque station, puisque ces derniers ne sont pas dirigés vers la FIFO de répétition de la station correspondante étant détruits par le dispositif de réception.

Le nombre de symboles IDDLE qui circulait sur l'anneau est, en tout état de cause inférieur à tpd, d'où :

$$\Sigma \, IDDLE < tpd$$

Il en résulte que la quantité de symboles globale émise par une station peut donc être supérieure à Tbi puisque la station peut récupérer un certain nombre de symboles IDDLE en transit sur l'anneau. On a donc :

$$Qi = Tbi + ei \times tpd$$

avec :

$$\sum_{1}^{n} ei = 1$$

Le terme (ei x tpd) résulte de la capture, par la station référencée i, d'un certain nombre de symboles IDDLE.

La fraction $\rho$ i de bande passante disponible sur une station référencée i s'écrit donc :

$$\rho \, i = (Tbi + ei \times tpd) / (tpd + \sum_{1}^{n} Tbi)$$

Cette fraction de bande passante étant égale à Qi/Qmax.

On voit que le temps de propagation de l'anneau qui figure au numérateur et au dénominateur de la fraction précédente se répartit donc de manière aléatoire entre les différentes stations du réseau.

On comprendra mieux ce phénomène en considérant les Figures 4 à 8 où l'anneau est supposé comporter deux stations A et B.

On considère la Figure 4. La station A y accède en permanence à l'anneau. La station B ne formule aucune demande d'émission, et répète en permanence les trames issues de la station A. La FIFO de répétition de la station A reste vide, puisque les trames en provenance de l'anneau ne sont pas répétées, la station A détruisant les trames qu'elle a précédemment émises et qui ont été répétées par la station B. La FIFO de répétition de B reste vide puisque cette dernière répète les trames émises par A et n'émet pas les siennes propres.

On voit donc que les deux FIFO de répétition des stations A et B restent vides à la Figure 4.

On considère la <u>Figure 5</u>. A cet instant, qu'on peut définir comme l'instant t = 0, la FIFO de répétition de la station B est vide. Cette dernière possède donc un droit d'émission Tb (profondeur de la FIFO de B). Les stations A et B émettent donc alors simultanément des trames. Les trames A sont mémorisées dans la FIFO de répétition B. B émet ses propres trames, alors que A tout en continuant l'émission de ses propres trames, continue à détruire les trames qu'elle avait précédemment envoyées.

On passe ensuite à la <u>Figure 6</u>. On suppose que $tpd_1$ est le temps de propagation de B vers A. A l'instant $tpd_1$, la première trame B atteint la station A. On suppose dans le même temps que, simultanément, A entame une émission de durée $T_b$, la FIFO de A étant alors vide à cet instant. A l'instant $t_1 = tpd_1 + T_b$, la FIFO de répétition A contient la quantité $T_b$ de symboles émis par B. Dès lors, les émissions locales de A ne sont plus possibles puisque le droit d'émission est nul ($R_b$ étant égal à $T_b$, et dès lors la différence $T_b - R_b$ est nulle). La FIFO de répétition de B contient une quantité de symboles $T_b$, en provenance de A. La station B qui vient d'émettre ses propres trames, peut donc désormais répéter les trames émises par A.

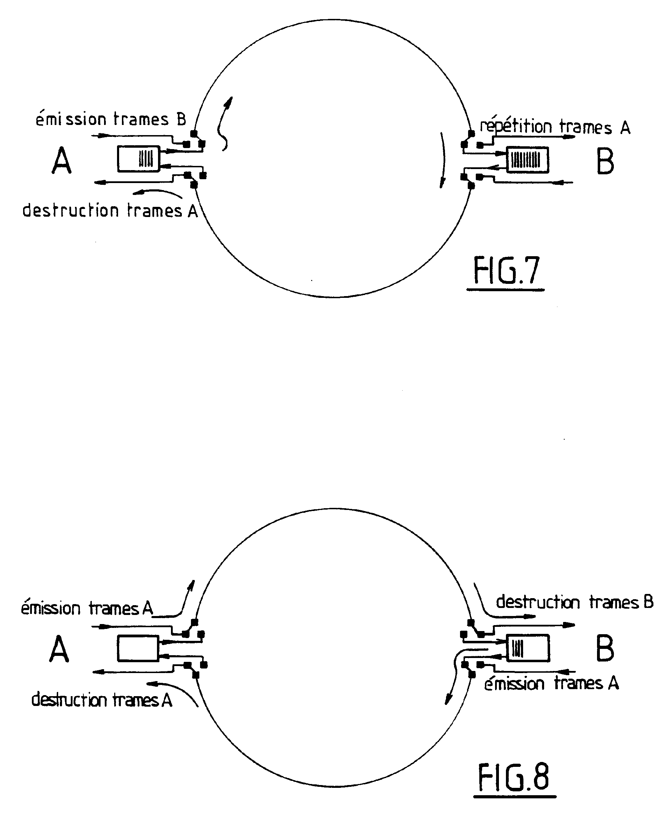

On passe désormais à la <u>Figure 7</u>. A l'instant $t_1$ défini ci-dessus, la FIFO de répétition de A est pleine et cette station ré-émet donc les symboles issus de B et continue à détruire les trames qu'elle avait préalablement émises. En conséquence, le nombre de symboles contenu dans la FIFO de A diminue.

Dans le même temps, le contenu de la FIFO de B reste égal à $T_b$. B peut donc répéter les symboles en provenance de A.

On passe alors à la <u>Figure 8</u>.

Si $tpd_2$ est le temps de propagation de A vers B, à l'instant $t_2 = tpd_1 + tpd_2 + 2T_b$, B a détruit la quantité $T_b$ de symboles préalablement émis. Sa FIFO est désormais vide, ce qui l'autorise à nouveau à accéder sur l'anneau.

La fraction de bande passante disponible pour A est donc :

$$\rho A = (T_b + tpd) / (tpd + 2T_b),$$

car initialement sur le médium, il n'y a qu'un nombre tpd de symboles émis par A, d'où ei = 1 pour la station A, alors que la fraction de bande passante disponible pour B est :

$$\rho B = T_b / (tpd + 2T_b),$$

car la quantité totale maximum de symboles à la saturation est :

$$2Tb + tpd, \text{ et } \rho A + \rho B = 1.$$

On voit que les symboles qui vont sur le médium sont, soit partagés par toutes les stations, soit pris par une seule station, selon l'historique de ce qui advient sur l'anneau : on ne peut donc garantir le partage équitable de ce dernier entre stations : ce partage est donc bien pseudo-aléatoire.

**A N N E X E**

```
ETAT E2                                          ETAT E1
RX-RELEASE                                       RX-REPEAT
       :               SD et SA # MA                    :
       :------------------------------------------->:
       :                                                :
       :               détection IDDLE                  :
       :<-------------------------------------------:
       :               ou SA = MA                       :
```

**TABLEAU I**

```
ETAT E3                                              ETAT E4
TX-IDDLE                                             TX-DATA
     :                                                  :
     :                                                  : Te-max = Tb-Rb
     :(lock-tx = FAUX) & [(Rb <= T-Pri) ou (flag-tx = VRAI)]: début Tx, on a :
     :---------------------------------------------------->: ( Q-lock = Rb
     :                                                  : ( flag-tx = VRAI
     :                                                  : ( Te-Max = Tb - Rb
     :          détection ED (fin de trame)             :
     :<-------------------------------------------------: fin Tx, on a :
     :                                                  :    flag-tx = FAUX
     :                                                  :    Si Q-lock # 0
     :                                                  :    lock-tx = VRAI
     :                                    ETAT E5
     :                                    TX-REPEAT
     :                                       :
     :    (flag-tx = FAUX) & (FIFO non vide) :
     :------------------------------------->:
     :                                       : fin tx, on a :
     :                                       :   Si lock-tx = VRAI
     :                                       :     décrémente Q-lock
     :    (détection ED)   ou (FIFO vide)    :     si Q-lock = 0
     :<------------------------------------:       lock-tx = FAUX
     :                                       :
                                       TABLEAU II
```


```
    ETAT E6                              ETAT E7
    ECTL-IDDLE                           ECTL-REPEAT
    (source IDDLE)                         (répète les symboles incidents)
        :                                       :
        :      SD et IDT = RESET,  IDT = SET     :
        :------------------------------------->:
        :                                       :
        :              détection IDDLE           :
        :<------------------------------------:
        :                                       :
        : SD et IDT = SET                        :
        :--------------:                         :
        :              :                         :
        :<------------:
                              TABLEAU III
```

## Revendications

1. Station (ST) appartenant à un réseau de communication (RN) où les différentes stations sont reliées entre elles en série au moyen d'un médium de transmission (FO), en formant un anneau où les données sont transmises dans un sens prédéterminé, sous forme de symboles (IDDLE, SD, IDT, etc..), comprenant :
   - un dispositif de réception des trames (DRX) provenant de l'anneau,
   - un dispositif d'émission des trames (DTX) vers l'anneau, émettant soit les propres trames de la station, soit répétant les trames qu'il reçoit des autres stations
   - une mémoire FIFO de répétition (ERPT), disposée en série entre les dispositifs de réception (DRX)

10

et d'émission (DTX), destinée à contenir les trames destinées à être répétées par la station (ST), caractérisée en ce qu'elle comprend:
- des moyens (DDT) de destruction de trames disposés dans le dispositif de réception (DRX), qui détruisent toutes les trames émises par la station (ST) elle- même, lesquelles reviennent à l'entrée du dispositif de réception après un tour complet de l'anneau (FO),
le dispositif d'émission (DTX) émettant soit les propres trames de la station (ST), soit répétant ses propres trames, le droit à émettre de la station (ST) étant à un instant donné égal à la différence entre la profondeur Tb de la mémoire de répétition (ERPT), et la quantité Rb de symboles présents dans celle-ci à cet instant, lorsque cette quantité est inférieure ou égale à une valeur déterminée T-Pri.

2. Station (ST) selon la revendication 1, caractérisée en ce que le dispositif de réception de trames (DRX) comprend un élément de réception (ERX) et un dispositif d'aiguillage (ARX) connecté, d'une part à l'anneau (RN) et d'autre part audit élément, lequel examine les symboles de chaque trame provenant de l'anneau et décide, en fonction de cet examen, si la trame en question doit être, soit détruite, soit répétée, auquel cas elle est envoyée à la mémoire de répétition (ERPT).

3. Station (ST) selon la revendication 2, caractérisée en ce qu'elle comprend également une mémoire tampon de réception (MRX) connectée à l'élément de réception (ERX), cette mémoire recevant les symboles de chacune des trames destinées à la station (ST) elle-même, ces symboles étant envoyés par l'élément de réception (ERX).

4. Station (ST) selon l'une des revendications 1 à 3, caractérisée en ce que le dispositif d'émission (DTX) comprend un élément d'émission (ETX) et un dispositif d'aiguillage (ATX), lequel est connecté à l'anneau (RN), et à la mémoire de répétition (ERPT), et commandé par l'élément d'émission (ETX).

5. Station selon la revendication 4, caractérisée en ce que l'élément d'émission (ETX) organise l'émission, soit des symboles contenus dans la mémoire de répétition (ERPT) au cas où la station décide de répéter la trame qu'elle a reçue, soit des symboles propres à la station elle-même.

6. Station selon l'une quelconque des revendications 4 et 5, caractérisée en ce que le dispositif d'émission (DTX) comprend également une mémoire tampon (MTX) reliée au dispositif d'aiguillage (ATX) et est commandée par l'élément d'émission (ETX), qui comprend l'ensemble des symboles des trames destinées à être émises en propre par la station (ST).

## Patentansprüche

1. Station (ST), die zu einem Kommunikationsnetz (RN) gehört, bei dem die verschiedenen Stationen miteinander durch ein Übertragungsmedium (FO) unter Bildung eines Ringes in Serie verbunden sind, in dem die Daten in einer vorbestimmten Richtung in Form von Symbolen (IDDLE, SD, IDT usw.) übertragen werden, enthaltend:
   - eine Empfangsanordnung (DRX) für die aus dem Ring kommenden Rahmen,
   - eine Sendeanordnung (DTX) zum Senden von Rahmen zum Ring, die entweder die eigenen Rahmen der Station sendet oder die Rahmen wiederholt, die sie von anderen Stationen empfängt,
   - einen FIFO-Wiederholungsspeicher (ERPT), der in Serie zwischen der Empfangsanordnung (DRX) und der Sendeanordnung (DTX) angeordnet und dazu bestimmt ist, die Rahmen zu enthalten, die von der Station (ST) wiederholt werden sollen,
   dadurch gekennzeichnet, daß sie enthält:
   - Mittel (DDT) zur Zerstörung von in der Empfangsanordnung (DRX) befindlichen Rahmen, die alle von der Station (ST) selbst ausgesendeten Rahmen zerstören, die nach einem vollständigen Umlauf durch den Ring (FO) zum Eingang der Empfangsanordnung zurückkehren,
   wobei die Sendeanordnung (DTX) entweder die eigenen Rahmen der Station (ST) sendet oder ihre eigenen Rahmen wiederholt, wobei das Recht der Station (ST) zu senden in einem gegebenen Zeitpunkt gleich der Differenz zwischen der Tiefe Tb des Wiederholungsspeichers (ERPT) und der Menge Rb der in diesem Zeitpunkt darin vorhandenen Symbole ist, wenn diese Menge kleiner als ein festgelegter Wert T-Pri oder gleich diesem Wert ist.

2. Station (ST) gemäß Anspruch 1, dadurch gekennzeichnet, daß die Rahmenempfangsanordnung (DRX) ein Empfangselement (ERX) und eine Weichenanordnung (ARX) enthält, die einerseits mit dem Ring (RN) und andererseits mit dem Element verbunden ist, das die Symbole jedes vom Netz komenden Rahmens prüft und in Abhängigkeit von dieser Prüfung entscheidet, ob der betreffende Rahmen entweder zerstört oder wiederholt werden muß, wobei er im letzten Fall zu dem Wiederholungsspeicher (ERPT) geschickt wird.

3. Station (ST) gemäß Anspruch 2, dadurch gekennzeichnet, daß sie auch einen Empfangspufferspeicher (MRX) enthält, der an das Empfangselement (ERX) angeschlossen ist, wobei dieser Speicher die Symbole jedes der für die Station (ST) selbst bestimmten Rahmen empfängt, wobei diese Symbole von dem Empfangselement (ERX) geschickt worden sind.

4. Station (ST) gemäß einem der Ansprüche 1 bis 3, dadurch gekennzeichnet, daß die Sendeanordnung (DTX) ein Sendeelement (ETX) und eine Weichenanordnung (ATX) enthält, die mit dem Ring (RN) und mit dem Wiederholungsspeicher (ERPT) verbunden ist und von dem Sendeelement (ETX) gesteuert wird.

5. Station gemäß Anspruch 4, dadurch gekennzeichnet, daß das Sendeelement (ETX) das Senden entweder der im Wiederholungsspeicher (ERPT) enthaltenen Symbole, falls die Station entscheidet, die von ihr empfangenen Rahmen zu wiederholen, oder der eigenen Symbole der Station selbst organisiert.

6. Station gemäß einem der Ansprüche 4 und 5, dadurch gekennzeichnet, daß die Sendeanordnung (DTX) auch einen Pufferspeicher (MTX) enthält, der mit der Weichenanordnung (ATX) verbunden ist und von dem Sendeelement (ETX) gesteuert wird und der die Gesamtheit der Symbole der Rahmen enthält, die dazu bestimmt sind, als eigene von der Station (ST) gesendet zu werden.

## Claims

1. A station (ST) belonging to a communications network (RN) where the various stations are linked together in series by means of a transmission medium (FO), forming a ring where the data are transmitted in a predetermined direction, in the form of symbols (IDDLE, SD, IDT, etc.), comprising:
   - a device (DRX) for receiving frames coming from the ring,
   - a device (DTX) for transmitting frames to the ring, either transmitting the frames of the station itself, or repeating frames that it receives from the other stations,
   - a FIFO repetition memory (ERPT), arranged in series between the receiving (DRX) and transmission (DTX) devices, intended to contain the frames intended to be repeated by the station (ST),
   characterised in that it comprises:
   - means (DDT) for destroying frames disposed in the receiving device (DRX), which destroy all the frames transmitted by the station (ST) itself, which retum to the input of the receiving device after travelling around the whole ring (FO),
   - the transmission device (DTX) either transmitting the frames of the station (ST) itself, or repeating its own frames, the right of the station (ST) to transmit being at any given moment equal to the difference between the depth Tb of the repetition memory (ERPT), and the quantity Rb of symbols present in the latter at that time, when this quantity is less than or equal to a given value T-Pri.

2. A station (ST) according to Claim 1, characterised in that the frame-receiving device (DRX) comprises a receiving element (ERX) and a routing device (ARX) connected on the one hand to the ring (RN) and on the other hand to said element, which examines the symbols of each frame coming from the ring and decides, as a function of this examination, whether the frame in question has to be either destroyed or repeated, in which case it is sent to the repetition memory (ERPT).

3. A station (ST) according to Claim 2, characterised in that it also comprises a buffer reception memory (MRX) connected to the reception element (ERX), this memory receiving the symbols of each of the frames intended for the station (ST) itself, these symbols being sent by the receiving element (ERX).

4. A station (ST) according to one of Claims 1 to 3, characterised in that the transmission device (DTX) comprises a transmission element (ETX) and a routing device (ATX), which is connected to the ring (RN) and to the repetition memory (ERPT), and controlled by the transmission element (ETX).

5. A station according to Claim 4, characterised in that the transmission element (ETX) organises the transmission, either of the symbols contained in the repetition memory (ERPT) in the event that the station decides to repeat the frame it has received, or symbols specific to the station itself.

6. A station according to any one of Claims 4 and 5, characterised in that the transmission device (DTX) also comprises a buffer memory (MTX) linked to the routing device (ATX) and is controlled by the transmission element (ETX), which comprises all the symbols of the frames intended to be transmitted by the station (ST) as its own.

FIG.1

FIG. 2

FIG.3

trames locales

répétition trames A

A

B

destruction trames A

**FIG.4**

émission trames A

les trames A sont
mémorisées dans la
fifo de répétition

A

B

destruction trames A

émission des trames B

**FIG.5**

émission trames A

répétition trames B

A

B

les trames B sont
mémorisées dans la
fifo de répétition.

**FIG.6**

émission trames B

répétition trames A

A

B

destruction trames A

FIG.7

émission trames A

destruction trames B

A

B

destruction trames A

émission trames A

FIG.8